# EUROPÄISCHE PATENTSCHRIFT

(11) **EP 2 236 323 B1**
(45) Veröffentlichungstag und Bekanntmachung des Hinweises auf die Patenterteilung: **22.06.2016**
(21) Anmeldenummer: 09008237.1
(22) Anmeldetag: 24.06.2009
(51) Int. Cl.: B60D 5/00, B61D 17/02, B61D 17/20, B62D 37/02, B62D 47/02, B62D 35/00

(54) **Windleitelement im Bereich des Übergangs zwischen zwei gelenkig miteinander verbundenen Fahrzeugen**
Air flow guidance element in the area between two interconnected railway vehicles
Elément de guidage du flux d'air dans la zone de connection entre deux véhicules ferroviaires

(30) Priorität: 01.04.2009 DE 202009004545 U
(43) Veröffentlichungstag der Anmeldung: 06.10.2010
(73) Patentinhaber: Hübner GmbH & Co. KG, 34123 Kassel (DE)
(72) Erfinder:
(74) Vertreter: Walther, Walther & Hinz GbR

(56) Entgegenhaltungen:
- EP-A1- 0 043 444
- JP-A- 7 002 103
- US-A- 3 410 226

## Beschreibung

Die vorliegende Erfindung betrifft ein Windleitelement zur im Wesentlichen außenhautbündiger Anbringung im Bereich des Übergangs zwischen zwei gelenkig miteinander verbundenen Fahrzeugen, wobei das Windleitelement im Querschnitt konisch zulaufend oder im Querschnitt bogenförmig ausgebildet ist und mindestens einen elastisch nachgiebigen Stützkörper aufweist.

Gelenkig miteinander verbundene Fahrzeuge sind durch einen sogenannten Übergang miteinander verbunden. Ein solcher Übergang umfasst neben einer Übergangsbrücke auch einen Balg, der die Übergangsbrücke zumindest tunnelartig umspannt. Die radiale Erstreckung des tunnelförmigen Balges ist hierbei insbesondere im Bereich der Seitenwandung geringer als die radiale Erstreckung des Fahrzeugkastens. Das heißt, dass zwischen der Fahrzeugaußenwand und dem Balg ein Abstand besteht. Dieser Abstand besteht zumindest im Bereich der Seitenwandungen aber auch im Bereich des Daches.

In diesem Zusammenhang ist aus der JP 07002103 A bekannt, an den Stirnseiten zweier gelenkig miteinander verbundenen Fahrzeugen Windleitelemente außenhautbündig anzuordnen. Diese Windleitelemente bestehen nach einer Ausführungsform jeweils aus einem Stützkörper, wobei beabstandet zur Stirnseite ein flexibles Material wie Gummi als Außenhaut vorbeigeführt ist.

Aus der US 3,410,226 A sind ebenfalls Windleitelemente bekannt, wobei die Windleitelement aus einem geschäumten Körper bestehen, der eine Außenhaut aus Vinyl oder Polyurethan aufweist. Die Außenhaut liegt hierbei unmittelbar an dem geschäumten Körper an.

Auch die EP 0 043 444 A1 zeigt gelenkig miteinander verbundene Fahrzeuge, die stirnseitig aufeinander zuweisende aufblasbare Windleitelemente aufweisen, die im Bereich der Stirnseite der Wagenkastenwand außenhautbündig angeordnet sind. Die Windleitelemente sind hierbei mehrkammerig ausgebildet und aufblasbar.

Insbesondere bei höheren Geschwindigkeiten entstehen im Bereich des Übergangs erhebliche Wirbel, die zu Strömungsverlusten führen, was wiederum eine erhöhte Antriebsleistung bedingt. Dies insbesondere dann, wenn man bedenkt, dass eine ganze Anzahl derartiger Übergänge bei einem Zug, beispielsweise einem ICE, vorgesehen sind. Es wurden bereits vielfach Versuche unternommen, um den Spalt zwischen Außenkontur des Balges und der Außenwand des Fahrzeugs abzudecken mit dem Ziel, eine strömungsgünstige Lösung bereitzustellen. Allerdings waren die Ergebnisse bislang wenig überzeugend. Dies insbesondere auch deshalb, weil eine vollständige Abdeckung des Zwischenraumes bzw. des Spaltes, zumindest bei Geradeausfahrt, nicht erreicht werden konnte. Des Weiteren ist hierbei insbesondere zu vermerken, dass die meisten Profile bei höheren Geschwindigkeiten flattern. Hiermit verbunden ist eine unangenehme Geräuschentwicklung.

Die der Erfindung zugrunde liegende Aufgabe besteht darin, ein Windelement der eingangs genannten Art bereitzustellen, das auch bei hohen Geschwindigkeiten nicht flattern.

Ein Windleitelement der eingangs genannten Art, das auch bei hohen Geschwindigkeiten bei Geradeausfahrt nicht flattert, zeichnet sich erfindungsgemäß dadurch aus, dass der Stützkörper mit einem kunststoffbeschichteten Stoff ummantelt ist, wobei der kunststoffbeschichtete Stoff an der Stirnseite des Stützkörpers beabstandet zu diesem vorbeigeführt ist, wobei im Bereich der Stirnseite des Stützkörpers die beiden einander gegenüberliegenden Stoffbahnen durch einen Steg miteinander verbunden sind. Das heißt, das Windleitelement kann insofern im Querschnitt auch halbkreisförmig ausgebildet sein, ähnlich einem Wulst. Wesentlich ist, dass die Aufstandsfläche des Windleitelements auf der Stirnseite des Wagenkastens größer ist als der Scheitelbereich.

Bei einem Windleitelementenpaar, umfassend zwei einander gegenüberliegende Windleitelemente wird durch die konische Ausbildung erreicht, dass die einander gegenüberliegenden Windleitelemente derart mit ihren Stirnseiten aneinander liegen, dass diese sich gegenseitig abstützen ohne seitlich auszubrechen. Die Windleitelemente eines Windleitelementenpaares bilden somit bei Geradeausfahrt eine im Wesentlichen ebene Fläche, die dem Wind kaum Angriffsfläche bietet, und insofern kaum Verwirbelungen auftreten.

Im Einzelnen ist in Bezug auf das Windleitelement vorgesehen, dass der konisch ausgebildete Körper einen Stützkörper umfasst, der mit einem kunststoffbeschichteten Stoff ummantelt ist. Hiebei ist vorgesehen, dass der kunststoffbeschichtete Stoff an der Stirnseite des Stützkörpers beabstandet vorbeigeführt ist.

Bereits an anderer Stelle ist erläutert worden, dass die einander gegenüberliegenden Windleitelemente eines Windleitelementenpaares derart aneinander anliegen, dass sie sich gegenseitig abstützen. Es ist weiterhin bekannt, dass kunststoffbeschichtete Stoffe eine verhältnismäßig hohe Eigensteifigkeit aufweisen. Die Windleitelemente eines Windleitelementenpaares liegen nun derart aneinander an, dass die Windleitelemente im Bereich der Stirnseite, an der sich beabstandet zum Stützkörper der kunststoffbeschichtete Stoff befindet, miteinander verzahnend aneinander anliegen. Insbesondere diese Ausbildung verhindert das Flattern der Windleitelemente bei hohen Geschwindigkeiten. Um zu verhindern, dass das Windleitelement im Bereich der Stirnseite bei Anliegen am benachbarten Windleitelement ausbaucht, ist vorgesehen, dass im Bereich der Stirnseite des Stützkörpers die beiden einander gegenüberliegenden Stoffbahnen durch einen Steg miteinander verbunden sind.

Im Einzelnen ist weiterhin vorgesehen, dass der Stützkörper in einer an der Stirnseite des Fahrzeugs angebrachten Nut lagerbar ist. Zur Erhöhung der Stabilität des Stützkörpers, insbesondere gegen auftretende Schwingungen, ist vorgesehen, dass zumindest an einer Seite, und zwar bevorzugt an der Innenseite, vorzugsweise jedoch zu beiden Seiten, eine Stützlamelle vorgesehen ist. Eine solche Stützlamelle, hergestellt ebenfalls aus elastisch nachgiebigem Material, erstreckt sich vorteilhaft über mindestens die Hälfte der Länge des Stützkörpers und läuft konisch in Richtung der Spitze des Windleitelementes zu. Insofern ergibt sich eine etwas stärkere Konturierung der konischen Ausbildung des Windleitelementes. In Bezug auf die Lamelle ist vorgesehen, dass auch die mindestens eine Stützlamelle durch eine Lamellennut an der Stirnseite des Fahrzeugs gehalten werden kann.

Es wurde an anderer Stelle erläutert, dass der nach Art eines Konus ausgebildete Stützkörper aus elastisch nachgiebigem Material, insbesondere einem Elastomer, hergestellt ist. Aus einem Elastomer hergestellte Profile sind üblicherweise schwarz. Es besteht nun allerdings ein Bedürfnis daran, die Windleitelemente der Fahrzeugfarbe anzupassen. Es wurden insofern bereits Versuche unternommen, den Stützkörper aus elastisch nachgiebigem Material mit einer Folie zu beschichten; es hat sich jedoch herausgestellt, dass derart ausgebildete Windleitelemente nur eine geringe Haltbarkeitsdauer aufwiesen, da sich die Folie relativ schnell vom Windleitelement löst. Auch eine Lackierung brachte nicht den gewünschten Erfolg, da die Lackierung unter Einfluss der Sonneneinstrahlung verhältnismäßig schnell brüchig wurde, und ihre ursprüngliche Farbe im Verlauf eines relativ kurzen Zeitraums bereits veränderte. So wurden insbesondere helle, weiße Farben schnell gelb.

Nun sind aus der Balgherstellung silikonbeschichtete Stoffe bekannt, die einerseits eine hohe UV-Beständigkeit aufweisen, und andererseits einfach zu reinigen sind. Durch die Ummantelung des Stützkörpers mit einem solchen kunststoffbeschichteten Stoff aus der Balgherstellung, insbesondere eines silikonbeschichteten Stoffes, können nun Windleitelemente bereitgestellt werden, die dauerhaft UV beständig sind und darüber hinaus leicht zu reinigen sind.

Anhand der Zeichnungen wird die Erfindung nachstehend beispielhaft näher erläutert.
- Fig. 1a: zeigt schematisch einen Übergang mit einem Balg und umlaufenden Windleitelementen in einer Seitenansicht;
- Fig. 1b: zeigt einen Schnitt gemäß Linie I b - I b aus Fig. 1 a;
- Fig. 2: zeigt eine Ansicht von oben auf den Übergang, wobei der Dachbereich der Windelemente weggelassen worden ist;
- Fig. 3a: zeigt einen Schnitt durch ein Windleitelement ohne Stützlamellen;
- Fig. 3b: zeigt einen Schnitt durch ein Windleitelement mit Stützlamellen;
- Fig. 4a-c: zeigen die Stellung der Windleitelemente eines Windleitelementenpaares bei Geradeausfahrt (Fig. 4a), bei Querversatz (Fig. 4b) und bei Kurvenfahrt (Fig. 4c).

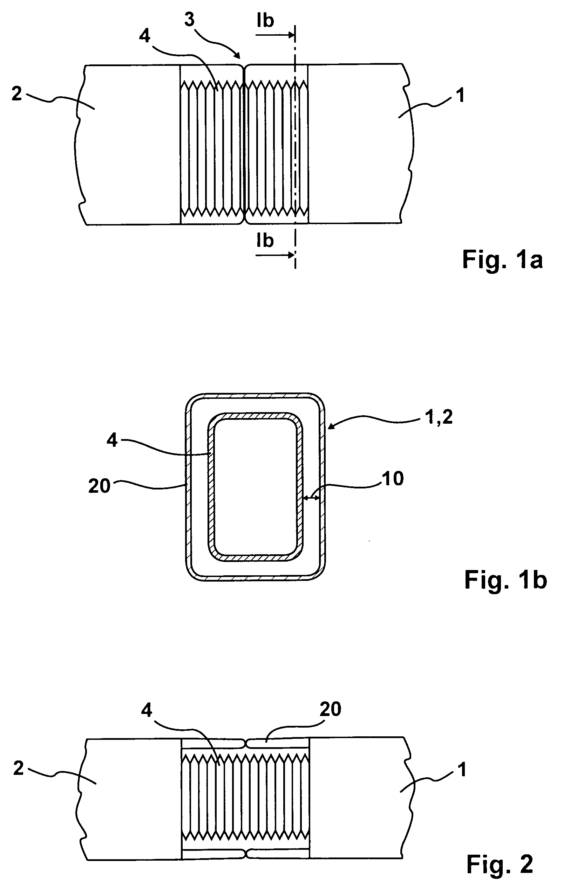

Gemäß Figur 1 a sind die beiden schematisch dargestellten Fahrzeuge 1 und 2 durch einen Übergang 3 mit einem tunnelförmigen Balg 4 verbunden. Der besseren Übersichtlichkeit wegen ist die Übergangsbrücke als Teil des Übergangs in den Zeichnungen weggelassen worden, ebenso wie die Kupplung der beiden Fahrzeuge.

Wie aus Figur 1 b und Figur 2 erkennbar, ist der Wagenkasten 1, 2 vom Durchmesser her größer als der mit 4 bezeichnete Balg. Der Abstand zwischen der Außenwandung des Wagenkastens 1 und dem Balg 4 ist als Spalt 10 bezeichnet. Dieser Spalt 10 wird abgedeckt durch ein Windleitelementenpaar, bestehend aus zwei Windleitelementen 20, die an der Stirnseite eines jeden Wagenkastens eines Fahrzeugs 1, 2 umlaufend, U-förmig oder nur seitlich, zu beiden Seiten des Fahrzeugs (rechts und links), verlaufend angebracht sind.

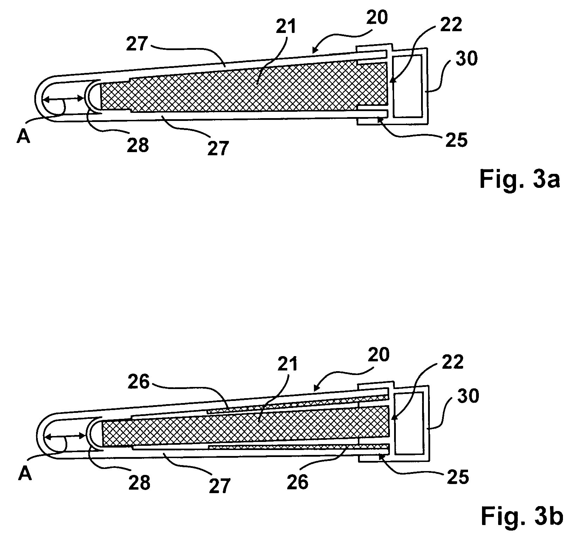

Die Ausbildung eines Windleitelementes 20 ergibt sich aus den Figuren 3a, 3b. Hierbei ist ein Stützkörper 21 vorgesehen, der in der Nut 22 einer Aufnahmeschiene 30 angeordnet ist. Die Aufnahmeschiene 30 ist an der Stirnseite des Wagenkastens umlaufend oder zumindest U-förmig verlaufend befestigt (Fig. 1 b). Gemäß Figur 3a ist ein konischer Stützkörper vorgesehen, der allein durch seine Konizität die erforderliche Stabilität aufbringt, und dem Windleitelement die konische Ausprägung verleiht. Gemäß Figur 3b besitzt die Aufnahmeschiene 30 darüber hinaus parallel zu der Nut 22 zu beiden Seiten jeweils eine Lamellennut 25 zur Aufnahme der Stützlamelle 26 sowie des kunststoffbeschichteten Stoffes 27. Die Stützlamelle läuft konisch auf den Stützkörper 21 zu, der insofern parallel zueinander verlaufende Seitenflächen aufweist, und vermittelt insofern dem Windleitelement in Verbindung mit dem beschichteten Stoff die im Querschnitt konische Kontur. Im Bereich der Stirnseite des Stützkörpers 21 befindet sich ein Steg 28, der die beiden gegenüberliegenden Seiten des kunststoffbeschichteten Stoffes verbindet, der beabstandet zur Stirnseite des Stützkörpers an dem Stützkörper vorbeigeführt wird, so dass sich zwischen der Stirnseite des Stützkörpers und der Stirnseite des Windleitelementes ein Abstand A ergibt. Es wurde bereits an anderer Stelle dargelegt, dass der mit einem Kunststoff beschichtete Stoff, und hier insbesondere ein mit einem Silikon oder Gummimaterial beschichteter Stoff, verhältnismäßig steif, aber dennoch elastisch nachgiebig ist.

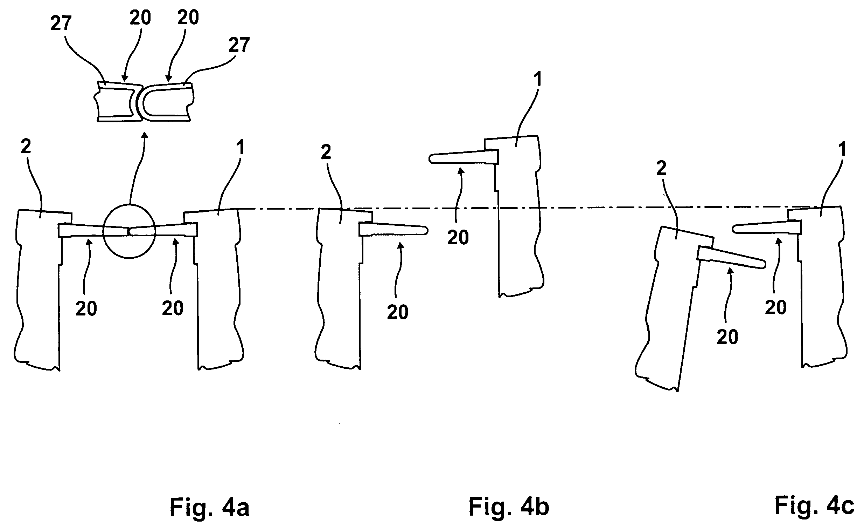

Bei Geradeausfahrt, wie in der Ausschnittsvergrößerung von Figur 4a dargestellt, greifen die beiden Windleitelemente eines Windleitelementenpaares verzahnend ineinander. Dieses verzahnende Ineinandergreifen verhindert zuverlässig ein Flattern der Windleitelemente bei hoher Geschwindigkeit.

In den Figuren 4b und 4c wird die Stellung der Windleitelemente bei Querversatz der Fahrzeuge, wie sie bei Wank- und Nickbewegungen auftreten sowie bei Kurvenfahrt (Fig. 4c) dargestellt.

## Patentansprüche

1. Windleitelement zur im Wesentlichen außenhautbündigen Anbringung im Bereich des Übergangs zwischen zwei gelenkig miteinander verbundenen Fahrzeugen, wobei
das Windleitelement (20, 20a) im Querschnitt konisch zulaufend oder im Querschnitt bogenförmig ausgebildet ist und mindestens einen elastisch nachgiebigen Stützkörper (21, 21 a) aufweist,
**dadurch gekennzeichnet,**
**dass** der Stützkörper (21) mit einem kunststoffbeschichteten Stoff (27) ummantelt ist, wobei der kunststoffbeschichtete Stoff an der Stirnseite des Stützkörpers (21) beabstandet zu diesem vorbeigeführt ist, wobei im Bereich der Stirnseite des Stützkörpers (21) die beiden einander gegenüberliegenden Stoffbahnen durch einen Steg (28) miteinander verbunden sind.

2. Windleitelement nach Anspruch 1,
**dadurch gekennzeichnet,**
**dass** der Stützkörper (21) in einer an der Stirnseite des Fahrzeugs angebrachten Nut (22) lagerbar ist.

3. Windleitelement nach einem der voranstehenden Ansprüche,
**dadurch gekennzeichnet,**
**dass** der Stützkörper (21) zumindest zu einer, vorzugsweise zu beiden Seiten eine Stützlamelle (26) aufweist.

4. Windleitelement nach Anspruch 3,
**dadurch gekennzeichnet,**
**dass** die mindestens eine Stützlamelle (26) durch eine Lamellennut (25) an der Stirnseite des Fahrzeugs (1, 2) gehalten werden kann.

5. Windleitelementenpaar, umfassend zwei einander gegenüberliegende Windleitelemente gemäß einem oder mehrerer der voranstehenden Ansprüche,
**dadurch gekennzeichnet,**
**dass** die einander gegenüberliegenden Windleitelemente (20) derart mit ihren Stirnseiten aneinander anliegen, dass sie sich gegenseitig abstützen.

6. Windleitelementenpaar, umfassend zwei einander gegenüberliegende Windleitelemente, nach Anspruch 5,
**dadurch gekennzeichnet,**
**dass** die Windleitelemente (20) eines Windleitelementenpaares im Bereich der Stirnseite, an der sich beabstandet zum Stützkörper der kunststoffbeschichtete Stoff befindet, miteinander verzahnend anliegen.

## Claims

1. An airflow guidance element to be installed substantially flush with the outer shell in the area of the gangway between two articulately connected vehicles, wherein
the airflow guidance element (20, 20a) is designed so that it has a tapered or arched cross-section and has at least one elastically resilient support body (21, 21 a),
**characterized in that**
the support body (21) is sheathed with a fabric (27) coated with a synthetic material, wherein the fabric coated with a synthetic material is guided at a distance past the support body (21) in the area of its front side, wherein in the area of the front side of the support body (21), the two opposing fabric panels are connected by a web (28).

2. The airflow guidance element according to claim 1,
**characterized in that**
the support body (21) can be mounted in a groove (22) attached to the front side of the vehicle.

3. The airflow guidance element according to one of the aforementioned claims,
**characterized in that**
the support body (21) comprises a support bar (26) on at least one, preferably on both sides.

4. The airflow guidance element according to claim 3,
**characterized in that**
the at least one support bar (26) is held at the front side of the vehicle (1, 2) by a bar groove (25).

5. A pair of airflow guidance elements comprising two opposing airflow guidance elements according to one or several of the aforementioned claims,
**characterized in that**
the opposing airflow guidance elements (20) rest against each other with their front sides in such a manner that they support each other.

6. The pair of airflow guidance elements comprising two opposing airflow guidance elements according to claim 5,
**characterized in that**
in the area of the front side, where the fabric coated with a synthetic material is located at a distance from the support body, the airflow guidance elements (20) of a pair of airflow guidance elements rest against one another in an interlocking manner.

## Revendications

1. Elément de guidage de flux d'air destiné à être fixé à fleur de l'enveloppe extérieure dans la région du passage d'intercommunication entre des véhicules reliés de manière articulée, où
l'élément de guidage de flux d'air (20, 20a) est conçu de manière à ce qu'il ait une section transversale conique ou arquée et comporte au moins un corps de support (21, 21 a) élastiquement souple, **caractérisé en ce que**
le corps de support (21) est enveloppé d'un tissu revêtu de matière synthétique (27), où le tissu revêtu de matière synthétique passe devant le côté frontal du corps de support (21) à distance de celui-ci, où les deux bandes de tissu opposées sont reliées par une traverse (28) dans la région du côté frontal du corps de support (21).

2. Elément de guidage de flux d'air selon la revendication 1,
**caractérisé en ce que**
le corps de support (21) peut être monté dans une rainure (22) fixée au côté de frontal du véhicule.

3. Elément de guidage de flux d'air selon l'une quelconque des revendications précédentes,
**caractérisé en ce que**
le corps de support (21) comporte une lamelle de support (26) sur au moins un, de préférence des deux côtés.

4. Elément de guidage de flux d'air selon la revendication 3,
**caractérisé en ce que**
l'au moins une lamelle de support (26) peut être maintenue sur le côté frontal du véhicule (1, 2) par une rainure de lamelle (25).

5. Paire d'éléments de guidage de flux d'air comprenant deux éléments de guidage de flux d'air opposés selon une ou plusieurs des revendications précédentes,
**caractérisée en ce que**
les éléments de guidage de flux d'air (20) opposés sont en appui l'un sur l'autre avec leur côté frontal de telle manière qu'ils se soutiennent mutuellement.

6. Paire d'éléments de guidage de flux d'air comprenant deux éléments de guidage de flux d'air opposés selon la revendication 5,
**caractérisée en ce que**
les éléments de guidage de flux d'air (20) d'une paire d'éléments de guidage de flux d'air s'appuient l'un sur l'autre de manière imbriquée dans la région du côté frontal, où se situe le tissu revêtu de matière synthétique à distance du corps de support.
